# EUROPEAN PATENT SPECIFICATION

(11) **EP 3 726 934 B1**
(45) Date of publication and mention of the grant of the patent: **04.03.2026**
(21) Application number: 18889931.4
(22) Date of filing: 12.12.2018
(51) Int. Cl.: H05B 47/11, B60Q 3/80, G09G 3/00

(54) **BRIGHTNESS ADJUSTMENT METHOD AND APPARATUS FOR LIGHT-EMITTING COMPONENT OF VEHICLE-MOUNTED INTELLIGENT CONTROLLER, AND DEVICE**
VERFAHREN UND VORRICHTUNG ZUR HELLIGKEITSEINSTELLUNG FÜR EINE LICHTEMITTIERENDE KOMPONENTE EINES FAHRZEUGMONTIERTEN INTELLIGENTEN STEUERGERÄTS UND VORRICHTUNG
PROCÉDÉ ET APPAREIL DE RÉGLAGE DE LUMINOSITÉ D'UN COMPOSANT ÉLECTROLUMINESCENT D'UN DISPOSITIF DE COMMANDE INTELLIGENT EMBARQUÉ, ET DISPOSITIF

(30) Priority: 15.12.2017 CN 201711353848; 31.05.2018 CN 201810556474
(43) Date of publication of application: 21.10.2020
(73) Proprietor: NIO (Anhui) Holding Co., Ltd., Hefei City, Anhui Province 230601 (CN)
(72) Inventor: CHEN, Yingrui, Shanghai 201804 (CN); LI, Tianshu, Shanghai 201804 (CN)
(74) Representative: Patentwerk B.V.
(86) International application number: PCT/CN2018/120428
(87) International publication number: WO 2019/114714

(56) References cited:
- CN-A- 103 273 885
- CN-A- 103 273 885
- CN-A- 103 273 894
- CN-A- 103 707 769
- CN-A- 103 707 769
- CN-A- 108 116 309
- CN-A- 108 650 763
- CN-U- 203 005 235
- CN-U- 205 131 078
- CN-U- 206 217 742

## Description

### Technical Field

The invention relates to the field of intelligent control, and in particular to a brightness adjustment method and apparatus for a light-emitting component of a vehicle-mounted intelligent controller, and a device.

### Background Art

**In** the prior art, there are generally two ways to adjust the brightness of a light-emitting component in a vehicle: manual adjustment and automatic adjustment. In the automatic adjustment way, the brightness may be automatically adjusted with the change of a use ambient, and manual operation is omitted, so that great convenience is achieved. However, the adjustment effect is often unsatisfactory because only the brightness of ambient light in the vehicle is measured as a reference value for brightness adjustment, and the influence of the brightness of ambient light outside the vehicle on the vision of human eyes is ignored.

China patent application CN103273885A discloses that the detection unit detects the difference between the brightness of the external environment and the brightness of the car and automatically adjusts the brightness of the picture displayed on the display unit.

China patent application CN103707769A discloses that by querying the data table, the control signal is outputted to the display module, and the brightness of the transparent display screen is automatically adjusted to achieve the best penetration ratio and display effect; if the brightness of the transparent display is not suitable, it can be manually adjusted by pressing the button.

Neither CN103273885A nor CN103707769A teach that it can obtain a current brightness value of the display unit and determine an expected brightness of the display unit based on the brightness difference between the internal and external ambient light to adjust the brightness of the display unit based on the expected brightness of the display unit.

### Summary of the Invention

In order to solve the above-mentioned problems in the prior art, the invention provides a brightness adjustment method and apparatus for a light-emitting component of a vehicle-mounted intelligent controller, and a device, which improve the brightness adjustment effect.

According to an aspect of the invention, there is provided a brightness adjustment method for a light-emitting component of a vehicle-mounted intelligent controller is as defined in claim 1. Further embodiments are disclosed in the dependent claims.

According to another aspect of the invention, there is provided a brightness adjustment apparatus for a light-emitting component of a vehicle-mounted intelligent controller is as defined in claim 5. Further embodiments are disclosed in the dependent claims.

According to a third aspect of the invention, there is provided a storage device in which a plurality of programs are stored, wherein the programs are adapted to be loaded and executed by a processor to implement a brightness adjustment method for a light-emitting component of a vehicle-mounted intelligent controller described above.

According to a fourth aspect of the invention, there is provided a processing device, which comprises: a processor and a storage device, wherein
the processor is adapted to execute various programs;
the storage device is adapted to store a plurality of programs; and
the programs are adapted to be loaded and executed by the processor to implement
a light-emitting component of a vehicle-mounted intelligent controller described above.

The invention has the beneficial effects as follows:
according to the invention, a brightness value of external ambient light of a vehicle and a brightness value of internal ambient light of the vehicle are measured to calculate a brightness difference between internal and external ambient light; a corresponding reference brightness value of a light-emitting component is then obtained according to a relationship table between brightness differences and reference values; the obtained reference value is compared with the current brightness value of the light-emitting component, and when the absolute value of the difference between the obtained reference value and the current brightness value of the light-emitting component is greater than or equal to a preset brightness difference, the brightness of the light-emitting component is adjusted to be the reference value. By using the method to adjust the brightness of the light-emitting component in the vehicle, a more accurate brightness adjustment strategy can be obtained, and the use demand of a user can be better met.

According to the invention, when manual adjustment is carried out, the relationship table between brightness differences and reference values is updated by utilizing the brightness value set by the user and the brightness difference of the internal and the external ambient light at the same time point, so that the strategy table is updated based on the use habits of the user, and the brightness adjustment of the light-emitting component in the vehicle better meets the personalized demand of the user through autonomous learning.

### Brief Description of the Drawings

Fig. 1 is a schematic view showing a mounting position of a vehicle-mounted intelligent controller in an embodiment of the invention;
Fig. 2 is a schematic flow chart of a brightness adjustment method for a light-emitting component of a vehicle-mounted intelligent controller according to a first embodiment of the invention;
Fig. 3 is a schematic flow chart of a brightness adjustment method for a light-emitting component of a vehicle-mounted intelligent controller according to a second embodiment of the invention;
Fig. 4 is a schematic view showing the constitution of a brightness adjustment apparatus for a light-emitting component of a vehicle-mounted intelligent controller according to a first embodiment of the invention; and
Fig. 5 is a schematic view showing the constitution of a brightness adjustment apparatus for a light-emitting component of a vehicle-mounted intelligent controller according to a second embodiment of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention.

**In** order to solve the problem in the prior art that a driver needs to manually operate devices in a vehicle, a vehicle-mounted intelligent controller is designed and installed inside the vehicle where the driver can easily observe. Generally, the vehicle-mounted intelligent controller has two forms. In one form, the controller is provided with a rotatable head, a display screen is arranged on the head, and characters and expression information can be displayed on the display screen; a voice input from a user can also be received, and corresponding operations can be made according to the voice input, such as controlling the speed of the vehicle, playing music, and introducing various functions of the vehicle; the surroundings, the in-vehicle environment, the behaviours and the expressions of people may also be detected by sensors inside or outside the vehicle, and corresponding operations can be performed. In the other form, the controller is provided with a light-emitting body or a light band.

The invention provides a brightness adjustment method and apparatus for a light-emitting component of a vehicle-mounted intelligent controller in order to enable the brightness of the light-emitting component of the vehicle-mounted intelligent controller to meet the use demands of the user in different illumination environments of the vehicle and to improve the comfort of visual sense.

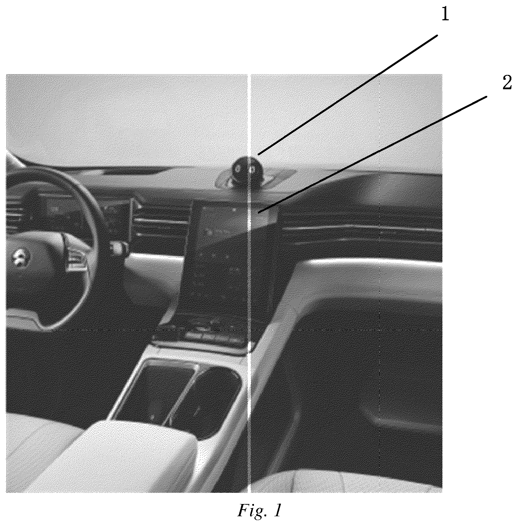

Fig. 1 is a schematic view showing a mounting position of the vehicle-mounted intelligent controller in an embodiment of the invention. As shown in Fig. 1, the vehicle-mounted intelligent controller 1 is exemplarily installed above a central control screen 2 in a cab. As used herein, the "central control screen" refers to a display screen for information entertainment and navigation devices and other devices in the cab.

**In** practical applications, the vehicle-mounted intelligent controller is not limited to being used only on vehicles, but can also be used in other scenarios besides vehicles. The vehicle-mounted intelligent controller can be fixedly installed at a position that the user can observe, or can be detachably installed at a position that the user can observe. A connection interface for the vehicle-mounted intelligent controller may be reserved at the position above the central control screen in the vehicle, and is electrically connected to the vehicle-mounted intelligent controller. In the application, the electrical connection may be wired connection or wireless connection, depending on practical application situations.

In addition, the vehicle-mounted intelligent controller can be placed in the vehicle as an independent apparatus or used in other scenarios besides vehicles. The vehicle-mounted intelligent controller may comprise a fixing apparatus, which can allow the vehicle-mounted intelligent controller to be fixed when the vehicle is traveling or the user is inconvenient to hold the vehicle-mounted intelligent controller, wherein the fixing apparatus can be provided inside with a circuit interface, which can be connected to the connection interface reserved in the vehicle. The vehicle-mounted intelligent controller can be detachably connected to the fixing apparatus, and exists independently of the fixing apparatus.

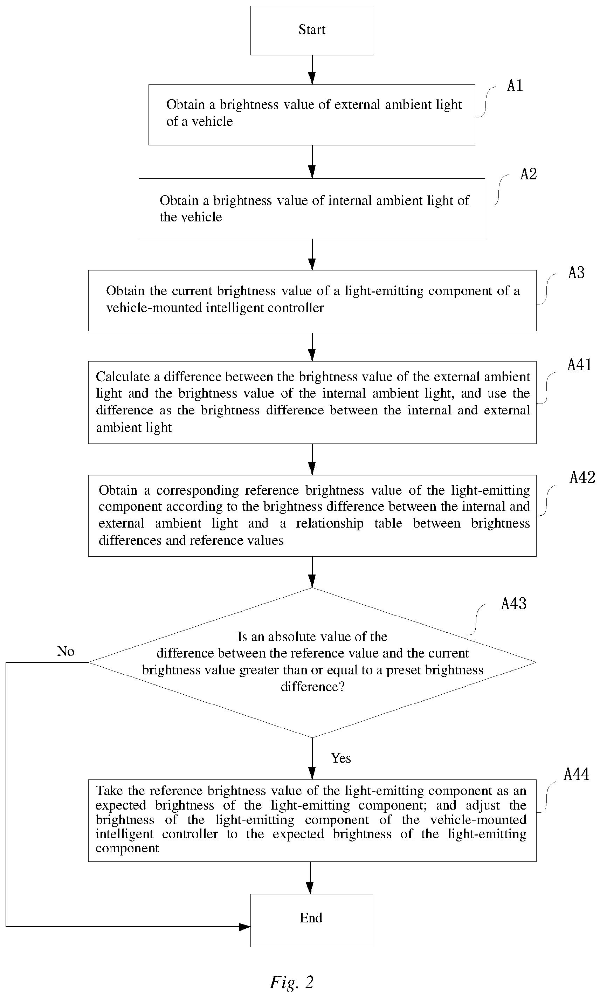

Fig. 2 is a schematic flow chart of a brightness adjustment method for a light-emitting component of a vehicle-mounted intelligent controller according to a first embodiment of the invention. As shown in Fig. 2, the adjustment method in the first embodiment comprises the following steps:
a step A1 of obtaining a brightness value of external ambient light of a vehicle;
a step A2 of obtaining a brightness value of internal ambient light of the vehicle;
a step A3 of obtaining a current brightness value of a light-emitting component of a vehicle-mounted intelligent controller;
a step A4 of calculating a difference between the brightness value of the external ambient light and the brightness value of the internal ambient light, and using the difference as the brightness difference between the internal and external ambient light; and determining an expected brightness of the light-emitting component based on the brightness difference between the internal and external ambient light and a preset correspondence relationship between brightness differences and reference values, and adjusting the brightness of the light-emitting component based on the expected brightness of the light-emitting component.

Specifically, in this embodiment, the step A4 comprises:
a step A41 of calculating a difference between the brightness value of the external ambient light and the brightness value of the internal ambient light, and using the difference as the brightness difference between the internal and external ambient light; and
a step A42 of obtaining a corresponding reference brightness value of the light-emitting component according to the brightness difference between the internal and external ambient light and a relationship table between brightness differences and reference values;
a step A43 of determining whether an absolute value of the difference between the reference brightness value of the light-emitting component and the current brightness value of the light-emitting component is greater than or equal to a preset brightness difference, if yes, proceeding to a step A44, and if not, keeping the current brightness unchanged; and
the step A44 of taking the reference brightness value of the light-emitting component as an expected brightness of the light-emitting component; and adjusting the brightness of the light-emitting component of the vehicle-mounted intelligent controller to the expected brightness of the light-emitting component.
wherein the relationship table between brightness differences and reference values is a preset table, which is set according to empirical data.

In this embodiment, the brightness value of the external ambient light is measured by a light sensor (such as a rain-light sensor) outside the vehicle; and the brightness value of the internal ambient light is measured by a light sensor inside the vehicle. When the vehicle-mounted intelligent controller itself does not comprise a light sensor, the brightness value of the internal ambient light is measured by a light sensor arranged on a dashboard and/or a central control screen, etc. If measurements are carried out simultaneously by the light sensors of a plurality of devices such as the dashboard and the central control screen, the average value of the measurement results of the plurality of sensors is taken as the brightness value of the internal ambient light. When the vehicle-mounted intelligent controller itself comprises a light sensor, the brightness value of the internal ambient light is measured by the light sensor comprised in the vehicle-mounted intelligent controller itself.

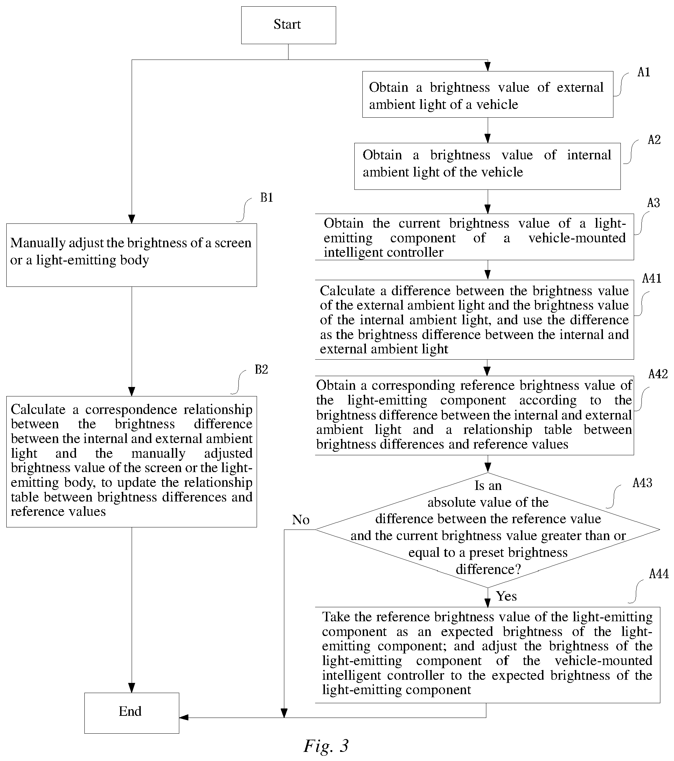

Fig. 3 is a schematic flow chart of a brightness adjustment method for a light-emitting component of a vehicle-mounted intelligent controller according to a second embodiment of the invention. As shown in Fig. 3, in addition to the automatic adjustment method adopted in the first embodiment, the adjustment method in the second embodiment, may further comprise:
a step B1 of manually adjusting the brightness of the light-emitting component.

In this embodiment, the adjustment method may further comprise:
a step B2 of calculating, according to an manually adjusted brightness value of the light-emitting component and the brightness value of the external ambient light and the brightness value of the internal ambient light at the same time point, a correspondence relationship between the brightness difference between the internal and external ambient light and the manually adjusted brightness value of the light-emitting component, to update the relationship table between brightness differences and reference values.

In this way, when the updated relationship table is applied to automatic adjustment, the obtained reference value is closer to the use habit of the driver of the vehicle.

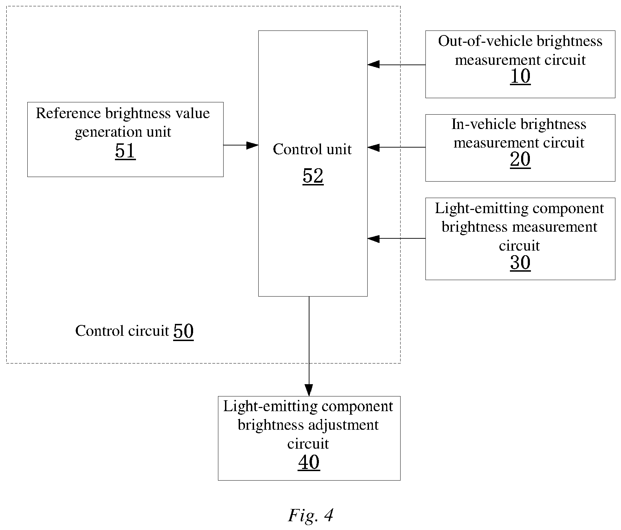

Fig. 4 is a schematic view showing the constitution of a brightness adjustment apparatus for a light-emitting component of a vehicle-mounted intelligent controller according to a first embodiment of the invention. As shown in Fig. 4, the adjustment apparatus in the first embodiment comprises: an out-of-vehicle brightness measurement circuit 10, an in-vehicle brightness measurement circuit 20, a light-emitting component brightness measurement circuit 30, a light-emitting component brightness adjustment circuit 40 and a control circuit 50.

The out-of-vehicle brightness measurement circuit 10, the in-vehicle brightness measurement circuit 20 and the light-emitting component brightness measurement circuit 30 are respectively electrically connected to the control circuit 50, and the light-emitting component brightness adjustment circuit 40 is electrically connected to the control circuit 50,
wherein
the out-of-vehicle brightness measurement circuit 10 is used to measure a brightness value of external ambient light of a vehicle and send the brightness value to the control circuit; the in-vehicle brightness measurement circuit 20 is used to measure a brightness value of internal ambient light of the vehicle and send the brightness value to the control circuit; the light-emitting component brightness measurement circuit 30 is used to measure the current brightness value of the light-emitting component of the vehicle-mounted intelligent controller and send the current brightness value to the control circuit; the control circuit 50 is used to calculate a difference between the brightness value of the external ambient light and the brightness value of the internal ambient light, and using the difference as the brightness difference between the internal and external ambient light; and to determine and output an expected brightness of the light-emitting component based on the brightness difference between the internal and external ambient light and a preset correspondence relationship between brightness differences and reference values, and adjusting the brightness of the light-emitting component based on the expected brightness of the light-emitting component; and the light-emitting component brightness adjustment circuit 40 is used to obtain the expected brightness of the light-emitting component and adjust the brightness of the light-emitting component.

Specifically, the control circuit in this embodiment comprises a reference brightness value generation unit 51 and a control unit 52. The reference brightness value generation unit is electrically connected to the control unit.

An output end of the reference brightness value generation unit 51 is connected to the control unit 52, and the reference brightness value generation unit is configured to calculate the brightness difference between the internal and external ambient light according to the brightness value of the external ambient light and the brightness value of the internal ambient light; and to obtain a corresponding reference brightness value of the light-emitting component according to the brightness difference between the internal and external ambient light and a relationship table between brightness differences and reference values.

The control unit 52 is configured to calculate an absolute value of the difference between the reference brightness value of the light-emitting component and the current brightness value of the light-emitting component; and to control the light-emitting component brightness adjustment circuit to adjust the current brightness of the light-emitting component to the reference brightness value of the light-emitting component if the absolute value is greater than or equal to the preset brightness difference.

The out-of-vehicle brightness measurement circuit 10 performs measurement by a light sensor (such as a rain-light sensor) outside the vehicle; and the in-vehicle brightness measurement circuit 20 performs measurement by a light sensor inside the vehicle. When the vehicle-mounted intelligent controller itself does not comprise a light sensor, the in-vehicle brightness measurement circuit comprises a light sensor arranged on a dashboard and/or a central control screen and other devices. When the vehicle-mounted intelligent controller itself comprises a light sensor, the in-vehicle brightness measurement circuit comprises the light sensor comprised in the vehicle-mounted intelligent controller itself.

In this embodiment, the out-of-vehicle brightness measurement circuit 10 and the in-vehicle brightness measurement circuit 20 are connected to the control circuit through a CAN bus or a wireless local area network.

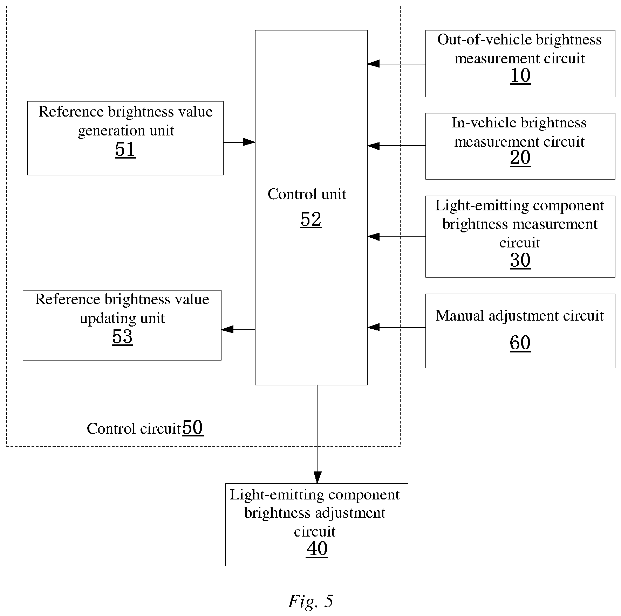

Fig. 5 is a schematic view showing the constitution of a brightness adjustment apparatus for a light-emitting component of a vehicle-mounted intelligent controller according to a second embodiment of the invention. As shown in Fig. 5, on the basis of the adjustment apparatus in the first embodiment, the adjustment apparatus in the second embodiment further comprises a manual adjustment circuit 60 electrically connected to the control unit 52.

The manual adjustment circuit 60 is configured to receive a manually input brightness value and send the manually input brightness value to the control unit 52.

Correspondingly, in this embodiment, the control unit 52 is further configured to adjust the current brightness of the light-emitting component by controlling the light-emitting component brightness adjustment circuit 40 according to the manually input brightness value.

In this embodiment, the control circuit 50 may further comprise a reference brightness value updating unit 53 electrically connected to the control unit 52.

The reference brightness value updating unit 53 is configured to update the relationship table between brightness differences and reference values according to the manually input brightness value and the brightness difference between the internal and external ambient light at the same time point. The brightness difference between the internal and external ambient light refers to the difference between the brightness value of the external ambient light and the brightness value of the internal ambient light.

In an embodiment of a storage device, in which a plurality of programs are stored, of the invention, the programs are adapted to be loaded and executed by a processor to implement a brightness adjustment method for a light-emitting component of a vehicle-mounted intelligent controller described above.

In an embodiment of a processing device of the invention, the processing device comprises: a processor and a storage device, wherein
the processor is adapted to execute various programs; the storage device is adapted to store a plurality of programs; and the programs are adapted to be loaded and executed by the processor to implement a light-emitting component of a vehicle-mounted intelligent controller described above.

## Claims

1. A brightness adjustment method for a light-emitting component of a vehicle-mounted intelligent controller, comprising the following steps:
obtaining a brightness value of external ambient light of a vehicle (A1);
obtaining a brightness value of internal ambient light of the vehicle (A2);
obtaining a current brightness value of a light-emitting component of a vehicle-mounted intelligent controller (A3);
calculating a difference between the brightness value of the external ambient light and the brightness value of the internal ambient light, and using the difference as the brightness difference between the internal and external ambient light (A41); and
determining an expected brightness of the light-emitting component based on the brightness difference between the internal and external ambient light and a preset correspondence relationship between brightness differences and reference values, and adjusting the brightness of the light-emitting component based on the expected brightness of the light-emitting component, which comprises:
obtaining a corresponding reference brightness value of the light-emitting component according to the brightness difference between the internal and external ambient light and a relationship table between brightness differences and reference values (A42);
if an absolute value of the difference between the reference brightness value of the light-emitting component and the current brightness value of the light-emitting component is greater than or equal to a preset brightness difference (A43), using the reference brightness value of the light-emitting component as the expected brightness of the light-emitting component (A44); and
adjusting the brightness of the light-emitting component of the vehicle-mounted intelligent controller to the expected brightness of the light-emitting component (A44);
wherein
the relationship table between brightness differences and reference values is a preset table, which is set according to empirical data;
the method further comprising a method of updating the relationship table between brightness differences and reference values:
calculating, according to an manually adjusted brightness value of the light-emitting component (B1) and the brightness value of the external ambient light and the brightness value of the internal ambient light at the same time point, a correspondence relationship between the brightness difference between the internal and external ambient light and the manually adjusted brightness value of the light-emitting component, to update the relationship table between brightness differences and reference values (B2).

2. The brightness adjustment method for a light-emitting component according to claim 1, **characterized in that** the brightness value of the external ambient light is measured by a light sensor arranged outside the vehicle; and the light sensor outside the vehicle includes a rain-light sensor.

3. The brightness adjustment method for a light-emitting component according to claim 2, **characterized in that**
when the vehicle-mounted intelligent controller itself does not comprise a light sensor, the brightness value of the internal ambient light is measured by a light sensor arranged on a dashboard and/or a central control screen; and
when the vehicle-mounted intelligent controller itself comprises a light sensor, the brightness value of the internal ambient light is measured by the light sensor comprised in the vehicle-mounted intelligent controller itself.

4. A brightness adjustment apparatus for a light-emitting component of a vehicle-mounted intelligent controller, **characterized by** comprising: an out-of-vehicle brightness measurement circuit (10), an in-vehicle brightness measurement circuit (20), a light-emitting component brightness measurement circuit (30), a light-emitting component brightness adjustment circuit (40) and a control circuit (50), wherein
the out-of-vehicle brightness measurement circuit (10), the in-vehicle brightness measurement circuit (20) and the light-emitting component brightness measurement circuit (30) are respectively electrically connected to the control circuit (50), and the light-emitting component brightness adjustment circuit (40) is electrically connected to the control circuit (50);
the out-of-vehicle brightness measurement circuit (10) is configured to measure a brightness value of external ambient light of a vehicle;
the in-vehicle brightness measurement circuit (20) is configured to measure a brightness value of internal ambient light of the vehicle;
the light-emitting component brightness measurement circuit (30) is configured to measure the current brightness value of a light-emitting component of a vehicle-mounted intelligent controller;
the control circuit (50) is configured to calculate a difference between the brightness value of the external ambient light and the brightness value of the internal ambient light, and for using the difference as the brightness difference between the internal and external ambient light; and to determine and output an expected brightness of the light-emitting component based on the brightness difference between the internal and external ambient light and a preset correspondence relationship between brightness differences and reference values, and for adjusting the brightness of the light-emitting component based on the expected brightness of the light-emitting component; and
the light-emitting component brightness adjustment circuit (40) is configured to obtain the expected brightness of the light-emitting component and adjust the brightness of the light-emitting component;
the control circuit (50) comprises: a reference brightness value generation unit (51) and a control unit (52), wherein
the reference brightness value generation unit (51) is electrically connected to the control unit (52);
the reference brightness value generation unit (51) is configured to calculate the brightness difference between the internal and external ambient light according to the brightness value of the external ambient light and the brightness value of the internal ambient light; and to obtain a corresponding reference brightness value of the light-emitting component according to the brightness difference between the internal and external ambient light and a relationship table between brightness differences and reference values; and
the control unit is configured to calculate an absolute value of the difference between the reference brightness value of the light-emitting component and the current brightness value of the light-emitting component; and to control the light-emitting component brightness adjustment circuit (40) to adjust the current brightness of the light-emitting component to the reference brightness value of the light-emitting component if the absolute value is greater than or equal to the preset brightness difference;
the apparatus further comprising: a manual adjustment circuit (60) electrically connected to the control unit (52), wherein
the manual adjustment circuit (60) is configured to receive a manually input brightness value and send the manually input brightness value to the control unit (52); and
the control unit (52) is further configured to adjust the current brightness of the light-emitting component by controlling the light-emitting component brightness adjustment circuit (40) according to the manually input brightness value.

5. The brightness adjustment apparatus for a light-emitting component according to claim 4, **characterized in that** the control circuit (50) further comprises a reference brightness value updating unit (53) electrically connected to the control unit (52), wherein
the reference brightness value updating unit is configured to update the relationship table between brightness differences and reference values according to the manually input brightness value and the brightness difference between the internal and external ambient light at the same time point; and
the brightness difference between the internal and external ambient light is the difference between the brightness value of the external ambient light and the brightness value of the internal ambient light.

6. The brightness adjustment apparatus for a light-emitting component according to claim 4, **characterized in that** the out-of-vehicle brightness measurement circuit (10) comprises a rain-light sensor.

7. The brightness adjustment apparatus for a light-emitting component according to claim 4, **characterized in that**
when the vehicle-mounted intelligent controller itself does not comprise a light sensor, the in-vehicle brightness measurement circuit comprises a light sensor arranged on a dashboard and/or a central control screen; and
when the vehicle-mounted intelligent controller itself comprises a light sensor, the in-vehicle brightness measurement circuit comprises the light sensor comprised in the vehicle-mounted intelligent controller itself.

8. The brightness adjustment apparatus for a light-emitting component according to any one of claims 4 to 7, **characterized in that** the out-of-vehicle brightness measurement circuit (10) and the in-vehicle brightness measurement circuit (20) are connected to the control circuit (50) through a CAN bus or a wireless local area network.

9. A storage device in which a plurality of programs are stored, **characterized in that** the programs are adapted to be loaded and executed by a processor to implement a brightness adjustment method for a light-emitting component of a vehicle-mounted intelligent controller according to any one of claims 1 to 3.

10. A processing device, comprising
a processor adapted to execute various programs; and
a storage device adapted to store a plurality of programs;
**characterized in that** the programs are adapted to be loaded and executed by the processor to implement
a brightness adjustment method for a light-emitting component of a vehicle-mounted intelligent controller according to any one of claims 1 to 3.

## Patentansprüche

1. Verfahren zur Helligkeitseinstellung für eine lichtemittierende Komponente eines fahrzeugmontierten intelligenten Steuergeräts, welches die folgenden Schritte umfasst:
Gewinnen eines Helligkeitswertes von Außenumgebungslicht eines Fahrzeugs (A1);
Gewinnen eines Helligkeitswertes von Innenumgebungslicht des Fahrzeugs (A2);
Gewinnen eines aktuellen Helligkeitswertes einer lichtemittierenden Komponente eines fahrzeugmontierten intelligenten Steuergeräts (A3);
Berechnen einer Differenz zwischen dem Helligkeitswert des Außenumgebungslichts und dem Helligkeitswert des Innenumgebungslichts und Verwenden der Differenz als Helligkeitsdifferenz zwischen dem Innen- und dem Außenumgebungslicht (A41); und
Bestimmen einer erwarteten Helligkeit der lichtemittierenden Komponente basierend auf der Helligkeitsdifferenz zwischen dem Innen- und dem Außenumgebungslicht und einer vorgegebenen Entsprechungsbeziehung zwischen Helligkeitsdifferenzen und Referenzwerten und Einstellen der Helligkeit der lichtemittierenden Komponente basierend auf der erwarteten Helligkeit der lichtemittierenden Komponente, welches umfasst:
Gewinnen eines entsprechenden Referenzhelligkeitswertes der lichtemittierenden Komponente gemäß der Helligkeitsdifferenz zwischen dem Innen- und dem Außenumgebungslicht und einer Beziehungstabelle zwischen Helligkeitsdifferenzen und Referenzwerten (A42);
falls ein absoluter Betrag der Differenz zwischen dem Referenzhelligkeitswert der lichtemittierenden Komponente und dem aktuellen Helligkeitswert der lichtemittierenden Komponente größer oder gleich einer vorgegebenen Helligkeitsdifferenz ist (A43), Verwenden des Referenzhelligkeitswertes der lichtemittierenden Komponente als erwartete Helligkeit der lichtemittierenden Komponente (A44); und
Einstellen der Helligkeit der lichtemittierenden Komponente des fahrzeugmontierten intelligenten Steuergeräts auf die erwartete Helligkeit der lichtemittierenden Komponente (A44);
wobei
die Beziehungstabelle zwischen Helligkeitsdifferenzen und Referenzwerten eine vorgegebene Tabelle ist, die anhand empirischer Daten erstellt wurde;
das Verfahren ferner ein Verfahren zum Aktualisieren der Beziehungstabelle zwischen Helligkeitsdifferenzen und Referenzwerten umfasst:
Berechnen, gemäß einem manuell eingestellten Helligkeitswert der lichtemittierenden Komponente (B1) und dem Helligkeitswert des Außenumgebungslichts und dem Helligkeitswert des Innenumgebungslichts zu demselben Zeitpunkt, einer Entsprechungsbeziehung zwischen der Helligkeitsdifferenz zwischen dem Innen- und dem Außenumgebungslicht und dem manuell eingestellten Helligkeitswert der lichtemittierenden Komponente, um die Beziehungstabelle zwischen Helligkeitsdifferenzen und Referenzwerten zu aktualisieren (B2).

2. Verfahren zur Helligkeitseinstellung für eine lichtemittierende Komponente nach Anspruch 1, **dadurch gekennzeichnet, dass** der Helligkeitswert des Außenumgebungslichts von einem außerhalb des Fahrzeugs angeordneten Lichtsensor gemessen wird; und der Lichtsensor außerhalb des Fahrzeugs einen Regen-Lichtsensor aufweist.

3. Verfahren zur Helligkeitseinstellung für eine lichtemittierende Komponente nach Anspruch 2, **dadurch gekennzeichnet, dass**,
wenn das fahrzeugmontierte intelligente Steuergerät selbst keinen Lichtsensor umfasst, der Helligkeitswert des Innenumgebungslichts von einem Lichtsensor gemessen wird, der an einem Armaturenbrett und/oder einem zentralen Kontrollbildschirm angeordnet ist; und
wenn das fahrzeugmontierte intelligente Steuergerät selbst einen Lichtsensor umfasst, der Helligkeitswert des Innenumgebungslichts von dem Lichtsensor gemessen wird, der in dem fahrzeugmontierten intelligenten Steuergerät selbst enthalten ist.

4. Vorrichtung zur Helligkeitseinstellung für eine lichtemittierende Komponente eines fahrzeugmontierten intelligenten Steuergeräts, **dadurch gekennzeichnet, dass** sie umfasst: eine Messschaltung für die Helligkeit außerhalb des Fahrzeugs (10), eine Messschaltung für die Helligkeit innerhalb des Fahrzeugs (20), eine Messschaltung für die Helligkeit der lichtemittierenden Komponente (30), eine Einstellschaltung für die Helligkeit der lichtemittierenden Komponente (40) und eine Steuerschaltung (50), wobei
die Messschaltung für die Helligkeit außerhalb des Fahrzeugs (10), die Messschaltung für die Helligkeit innerhalb des Fahrzeugs (20) und die Messschaltung für die Helligkeit der lichtemittierenden Komponente (30) jeweils mit der Steuerschaltung (50) elektrisch verbunden sind und die Einstellschaltung für die Helligkeit der lichtemittierenden Komponente (40) mit der Steuerschaltung (50) elektrisch verbunden ist;
die Messschaltung für die Helligkeit außerhalb des Fahrzeugs (10) dafür ausgelegt ist, einen Helligkeitswert von Außenumgebungslicht eines Fahrzeugs zu messen;
die Messschaltung für die Helligkeit innerhalb des Fahrzeugs (20) dafür ausgelegt ist, einen Helligkeitswert von Innenumgebungslicht des Fahrzeugs zu messen;
die Messschaltung für die Helligkeit der lichtemittierenden Komponente (30) dafür ausgelegt ist, den aktuellen Helligkeitswert einer lichtemittierenden Komponente eines fahrzeugmontierten intelligenten Steuergeräts zu messen;
die Steuerschaltung (50) dafür ausgelegt ist,
eine Differenz zwischen dem Helligkeitswert des Außenumgebungslichts und dem Helligkeitswert des Innenumgebungslichts zu berechnen, und zum
Verwenden der Differenz als Helligkeitsdifferenz zwischen dem Innen- und dem Außenumgebungslicht; und eine erwartete Helligkeit der lichtemittierenden Komponente basierend auf der Helligkeitsdifferenz zwischen dem Innen- und dem Außenumgebungslicht und einer vorgegebenen Entsprechungsbeziehung zwischen Helligkeitsdifferenzen und Referenzwerten zu bestimmen und auszugeben, und zum
Einstellen der Helligkeit der lichtemittierenden Komponente basierend auf der erwarteten Helligkeit der lichtemittierenden Komponente; und
die Einstellschaltung für die Helligkeit der lichtemittierenden Komponente (40) dafür ausgelegt ist, erwartete Helligkeit der lichtemittierenden Komponente zu gewinnen und die Helligkeit der lichtemittierenden Komponente einzustellen;
die Steuerschaltung (50) umfasst: eine Referenzhelligkeitswert-Erzeugungseinheit (51) und eine Steuereinheit (52), wobei
die Referenzhelligkeitswert-Erzeugungseinheit (51) mit der Steuereinheit (52) elektrisch verbunden ist;
die Referenzhelligkeitswert-Erzeugungseinheit (51) dafür ausgelegt ist, die Helligkeitsdifferenz zwischen dem Innen- und dem Außenumgebungslicht gemäß dem Helligkeitswert des Außenumgebungslichts und dem Helligkeitswert des Innenumgebungslichts zu berechnen; und einen entsprechenden Referenzhelligkeitswert der lichtemittierenden Komponente gemäß der Helligkeitsdifferenz zwischen dem Innen- und dem Außenumgebungslicht und einer Beziehungstabelle zwischen Helligkeitsdifferenzen und Referenzwerten zu gewinnen; und
die Steuereinheit dafür ausgelegt ist, einen absoluten Betrag der Differenz zwischen dem Referenzhelligkeitswert der lichtemittierenden Komponente und dem aktuellen Helligkeitswert der lichtemittierenden Komponente zu berechnen; und die Einstellschaltung für die Helligkeit der lichtemittierenden Komponente (40) zu steuern, um die aktuelle Helligkeit der lichtemittierenden Komponente auf den Referenzhelligkeitswert der lichtemittierenden Komponente einzustellen, falls der absolute Betrag größer oder gleich der vorgegebenen Helligkeitsdifferenz ist;
wobei die Vorrichtung ferner umfasst: eine manuelle Einstellschaltung (60), die mit der Steuereinheit (52) elektrisch verbunden ist, wobei
die manuelle Einstellschaltung (60) dafür ausgelegt ist, einen manuell eingegebenen Helligkeitswert zu empfangen und den manuell eingegebenen Helligkeitswert an die Steuereinheit (52) zu senden; und
die Steuereinheit (52) ferner dafür ausgelegt ist, die aktuelle Helligkeit der lichtemittierenden Komponente durch Steuern der Einstellschaltung für die Helligkeit der lichtemittierenden Komponente (40) gemäß dem manuell eingegebenen Helligkeitswert zu steuern.

5. Vorrichtung zur Helligkeitseinstellung für eine lichtemittierende Komponente nach Anspruch 4, **dadurch gekennzeichnet, dass** die Steuerschaltung (50) ferner eine Referenzhelligkeitswert-Aktualisierungseinheit (53) umfasst, die mit der Steuereinheit (52) elektrisch verbunden ist, wobei
die Referenzhelligkeitswert-Aktualisierungseinheit dafür ausgelegt ist, die Beziehungstabelle zwischen Helligkeitsdifferenzen und Referenzwerten gemäß dem manuell eingegebenen Helligkeitswert und der Helligkeitsdifferenz zwischen dem Innen- und dem Außenumgebungslicht zu demselben Zeitpunkt zu aktualisieren; und
die Helligkeitsdifferenz zwischen dem Innen- und dem Außenumgebungslicht die Differenz zwischen dem Helligkeitswert des Außenumgebungslichts und dem Helligkeitswert des Innenumgebungslichts ist.

6. Vorrichtung zur Helligkeitseinstellung für eine lichtemittierende Komponente nach Anspruch 4, **dadurch gekennzeichnet, dass** die Messschaltung für die Helligkeit außerhalb des Fahrzeugs (10) einen Regen-Lichtsensor umfasst.

7. Vorrichtung zur Helligkeitseinstellung für eine lichtemittierende Komponente nach Anspruch 4, **dadurch gekennzeichnet, dass**,
wenn das fahrzeugmontierte intelligente Steuergerät selbst keinen Lichtsensor umfasst, die Messschaltung für die Helligkeit innerhalb des Fahrzeugs einen Lichtsensor umfasst, der an einem Armaturenbrett und/oder einem zentralen Kontrollbildschirm angeordnet ist; und
wenn das fahrzeugmontierte intelligente Steuergerät selbst einen Lichtsensor umfasst, die Messschaltung für die Helligkeit innerhalb des Fahrzeugs den Lichtsensor umfasst, der in dem fahrzeugmontierten intelligenten Steuergerät selbst enthalten ist.

8. Vorrichtung zur Helligkeitseinstellung für eine lichtemittierende Komponente nach einem der Ansprüche 4 bis 7, **dadurch gekennzeichnet, dass** die Messschaltung für die Helligkeit außerhalb des Fahrzeugs (10) und die Messschaltung für die Helligkeit innerhalb des Fahrzeugs (20) mit der Steuerschaltung (50) über einen CAN-Bus oder ein drahtloses lokales Netzwerk verbunden sind.

9. Speichervorrichtung, in der mehrere Programme gespeichert sind, **dadurch gekennzeichnet, dass** die Programme dazu eingerichtet sind, von einem Prozessor geladen und ausgeführt zu werden, um ein Verfahren zur Helligkeitseinstellung für eine lichtemittierende Komponente eines fahrzeugmontierten intelligenten Steuergeräts nach einem der Ansprüche 1 bis 3 zu implementieren.

10. Verarbeitungsvorrichtung, welche umfasst:
einen Prozessor, der dazu eingerichtet ist, verschiedene Programme auszuführen; und
eine Speichervorrichtung, die dazu eingerichtet ist, mehrere Programme zu speichern;
**dadurch gekennzeichnet, dass** die Programme dazu eingerichtet sind, von dem Prozessor geladen und ausgeführt zu werden, um ein Verfahren zur Helligkeitseinstellung für eine lichtemittierende Komponente eines fahrzeugmontierten intelligenten Steuergeräts nach einem der Ansprüche 1 bis 3 zu implementieren.

## Revendications

1. Procédé de réglage de luminosité pour un composant électroluminescent d'un organe de commande intelligent monté sur véhicule, comprenant les étapes suivantes :
l'obtention d'une valeur de luminosité de lumière ambiante externe d'un véhicule (A1) ;
l'obtention d'une valeur de luminosité de lumière ambiante interne du véhicule (A2) ;
l'obtention d'une valeur de luminosité actuelle d'un composant électroluminescent d'un organe de commande intelligent monté sur véhicule (A3) ;
le calcul d'une différence entre la valeur de luminosité de la lumière ambiante externe et la valeur de luminosité de la lumière ambiante interne, et l'utilisation de la différence en tant que différence de luminosité entre la lumière ambiante interne et externe (A41) ; et
la détermination d'une luminosité attendue du composant électroluminescent sur la base de la différence de luminosité entre la lumière ambiante interne et externe et d'une relation de correspondance prédéfinie entre des différences de luminosité et des valeurs de référence, et le réglage de la luminosité du composant électroluminescent sur la base de la luminosité attendue du composant électroluminescent, qui comprend :
l'obtention d'une valeur de référence de luminosité correspondante du composant électroluminescent selon la différence de luminosité entre la lumière ambiante interne et externe et une table de relation entre des différences de luminosité et des valeurs de référence (A42) ;
si une valeur absolue de la différence entre la valeur de référence de luminosité du composant électroluminescent et la valeur de luminosité actuelle du composant électroluminescent est supérieure ou égale à une différence de luminosité prédéfinie (A43), l'utilisation de la valeur de référence de luminosité du composant électroluminescent en tant que luminosité attendue du composant électroluminescent (A44) ; et
le réglage de la luminosité du composant électroluminescent de l'organe de commande intelligent monté sur véhicule à la luminosité attendue du composant électroluminescent (A44) ;
dans lequel
la table de relation entre des différences de luminosité et des valeurs de référence est une table prédéfinie, qui est définie selon des données empiriques ;
le procédé comprenant en outre un procédé de mise à jour de la table de relation entre des différences de luminosité et des valeurs de référence :
le calcul, selon une valeur de luminosité réglée manuellement du composant électroluminescent (B1) et la valeur de luminosité de la lumière ambiante externe et la valeur de luminosité de la lumière ambiante interne au même instant, d'une relation de correspondance entre la différence de luminosité entre la lumière ambiante interne et externe et la valeur de luminosité réglée manuellement du composant électroluminescent, pour mettre à jour la table de relation entre des différences de luminosité et des valeurs de référence (B2).

2. Procédé de réglage de luminosité pour composant électroluminescent selon la revendication 1, **caractérisé en ce que** la valeur de luminosité de la lumière ambiante externe est mesurée par un capteur de lumière agencé en dehors du véhicule ; et le capteur de lumière en dehors du véhicule inclut un capteur de pluie-lumière.

3. Procédé de réglage de luminosité pour composant électroluminescent selon la revendication 2, **caractérisé en ce que**
lorsque l'organe de commande intelligent monté sur véhicule lui-même ne comprend pas de capteur de lumière, la valeur de luminosité de la lumière ambiante interne est mesurée par un capteur de lumière agencé sur un tableau de bord et/ou un écran de commande central ; et
lorsque l'organe de commande intelligent monté sur véhicule lui-même comprend un capteur de lumière, la valeur de luminosité de la lumière ambiante interne est mesurée par le capteur de lumière compris dans l'organe de commande intelligent monté sur véhicule lui-même.

4. Appareil de réglage de luminosité pour un composant électroluminescent d'un organe de commande intelligent monté sur véhicule, **caractérisé en ce qu'**il comprend : un circuit de mesure de luminosité non embarqué sur véhicule (10), un circuit de mesure de luminosité embarqué sur véhicule (20), un circuit de mesure de luminosité de composant électroluminescent (30), un circuit de réglage de luminosité de composant électroluminescent (40), et un circuit de commande (50), dans lequel
le circuit de mesure de luminosité non embarqué sur véhicule (10), le circuit de mesure de luminosité embarqué sur véhicule (20), et le circuit de mesure de luminosité de composant électroluminescent (30) sont respectivement connectés électriquement au circuit de commande (50), et le circuit de réglage de luminosité de composant électroluminescent (40) est connecté électriquement au circuit de commande (50) ;
le circuit de mesure de luminosité non embarqué sur véhicule (10) est configuré pour mesurer une valeur de luminosité de lumière ambiante externe d'un véhicule ;
le circuit de mesure de luminosité embarqué sur véhicule (20) est configuré pour mesurer une valeur de luminosité de lumière ambiante interne du véhicule ;
le circuit de mesure de luminosité de composant électroluminescent (30) est configuré pour mesurer la valeur de luminosité actuelle d'un composant électroluminescent d'un organe de commande intelligent monté sur véhicule ;
le circuit de commande (50) est configuré pour calculer une différence entre la valeur de luminosité de la lumière ambiante externe et la valeur de luminosité de la lumière ambiante interne, et pour utiliser la différence en tant que différence de luminosité entre la lumière ambiante interne et externe ; et pour déterminer et produire une luminosité attendue du composant électroluminescent sur la base de la différence de luminosité entre la lumière ambiante interne et externe et d'une relation de correspondance prédéfinie entre des différences de luminosité et des valeurs de référence, et pour régler la luminosité du composant électroluminescent sur la base de la luminosité attendue du composant électroluminescent ; et
le circuit de réglage de luminosité de composant électroluminescent (40) est configuré pour obtenir la luminosité attendue du composant électroluminescent et régler la luminosité du composant électroluminescent ;
le circuit de commande (50) comprend : une unité de génération de valeur de luminosité de référence (51) et une unité de commande (52), dans lequel
l'unité de génération de valeur de luminosité de référence (51) est connectée électriquement à l'unité de commande (52) ;
l'unité de génération de valeur de luminosité de référence (51) est configurée pour calculer la différence de luminosité entre la lumière ambiante interne et externe selon la valeur de luminosité de la lumière ambiante externe et la valeur de luminosité de la lumière ambiante interne ; et pour obtenir une valeur de référence de luminosité correspondante du composant électroluminescent selon la différence de luminosité entre la lumière ambiante interne et externe et une table de relation entre des différences de luminosité et des valeurs de référence ; et
l'unité de commande est configurée pour calculer une valeur absolue de la différence entre la valeur de référence de luminosité du composant électroluminescent et la valeur de luminosité actuelle du composant électroluminescent ; et pour commander le circuit de réglage de luminosité de composant électroluminescent (40) pour régler la luminosité actuelle du composant électroluminescent à la valeur de référence de luminosité du composant électroluminescent si la valeur absolue est supérieure ou égale à la différence de luminosité prédéfinie ;
l'appareil comprenant en outre : un circuit de réglage manuel (60) connecté électriquement à l'unité de commande (52), dans lequel
le circuit de réglage manuel (60) est configuré pour recevoir une valeur de luminosité entrée manuellement et envoyer la valeur de luminosité entrée manuellement à l'unité de commande (52) ; et
l'unité de commande (52) est en outre configurée pour régler la luminosité actuelle du composant électroluminescent en commandant le circuit de réglage de luminosité de composant électroluminescent (40) selon la valeur de luminosité entrée manuellement.

5. Appareil de réglage de luminosité pour composant électroluminescent selon la revendication 4, **caractérisé en ce que** le circuit de commande (50) comprend en outre une unité de mise à jour de valeur de référence de luminosité (53) connectée électriquement à l'unité de commande (52), dans lequel
l'unité de mise à jour de valeur de référence de luminosité est configurée pour mettre à jour la table de relation entre des différences de luminosité et des valeurs de référence selon la valeur de luminosité entrée manuellement et la différence de luminosité entre la lumière ambiante interne et externe au même instant ; et
la différence de luminosité entre la lumière ambiante interne et externe est la différence entre la valeur de luminosité de la lumière ambiante externe et la valeur de luminosité de la lumière ambiante interne.

6. Appareil de réglage de luminosité pour composant électroluminescent selon la revendication 4, **caractérisé en ce que** le circuit de mesure de luminosité non embarqué sur véhicule (10) comprend un capteur de pluie-lumière.

7. Appareil de réglage de luminosité pour composant électroluminescent selon la revendication 4, **caractérisé en ce que**
lorsque l'organe de commande intelligent monté sur véhicule lui-même ne comprend pas de capteur de lumière, le circuit de mesure de luminosité embarqué sur véhicule comprend un capteur de lumière agencé sur un tableau de bord et/ou un écran de commande central ; et
lorsque l'organe de commande intelligent monté sur véhicule lui-même comprend un capteur de lumière, le circuit de mesure de luminosité embarqué sur véhicule comprend le capteur de lumière compris dans l'organe de commande intelligent monté sur véhicule lui-même.

8. Appareil de réglage de luminosité pour composant électroluminescent selon l'une quelconque des revendications 4 à 7, **caractérisé en ce que** le circuit de mesure de luminosité non embarqué sur véhicule (10) et le circuit de mesure de luminosité embarqué sur véhicule (20) sont connectés au circuit de commande (50) par le biais d'un bus CAN ou d'un réseau local sans fil.

9. Dispositif de stockage dans lequel une pluralité de programmes sont stockés, **caractérisé en ce que** les programmes sont adaptés pour être chargés et exécutés par un processeur pour mettre en œuvre un procédé de réglage de luminosité pour composant électroluminescent d'organe de commande intelligent monté sur véhicule selon l'une quelconque des revendications 1 à 3.

10. Dispositif de traitement, comprenant
un processeur adapté pour exécuter divers programmes ; et
un dispositif de stockage adapté pour stocker une pluralité de programmes ;
**caractérisé en ce que** les programmes sont adaptés pour être chargés et exécutés par le processeur pour mettre en œuvre un procédé de réglage de luminosité pour composant électroluminescent d'organe de commande intelligent monté sur véhicule selon l'une quelconque des revendications 1 à 3.
